# EUROPÄISCHE PATENTSCHRIFT

(11) **EP 2 252 491 B1**
(45) Veröffentlichungstag und Bekanntmachung des Hinweises auf die Patenterteilung: **14.03.2012**
(21) Anmeldenummer: 09717688.7
(22) Anmeldetag: 26.01.2009
(51) Int. Cl.: B60W 30/16, B60K 31/00, B60W 10/06, B60W 10/18

(54) **LÄNGSFÜHRUNGSASSISTENT MIT SEITENASSISTENZFUNKTION FÜR KRAFTFAHRZEUGE**
LONGITUDINAL GUIDE ASSISTANT WITH LATERAL ASSISTANCE FUNCTION FOR MOTOR VEHICLES
ASSISTANT DE GUIDAGE LONGITUDINAL COMPORTANT UNE FONCTION D'ASSISTANCE LATÉRALE POUR DES VÉHICULES MOTORISÉS

(30) Priorität: 05.03.2008 DE 102008012644
(43) Veröffentlichungstag der Anmeldung: 24.11.2010
(73) Patentinhaber: Robert Bosch GmbH, 70442 Stuttgart (DE)
(72) Erfinder: JORDAN, Ruediger, 70192 Stuttgart (DE); SCHWINDT, Oliver, 48331 Farmington Hills (US)
(86) Internationale Anmeldenummer: PCT/EP2009/050821
(87) Internationale Veröffentlichungsnummer: WO 2009/109419

(56) Entgegenhaltungen:
- EP-A- 1 320 082
- EP-A- 1 852 325
- DE-A1- 10 030 258
- DE-A1- 10 336 986
- DE-A1- 10 354 983
- DE-C1- 4 313 568

## Beschreibung

### Stand der Technik

Die Erfindung betrifft einen Längsführungsassistenten für Kraftfahrzeuge, mit einer Vorfeldsensorik zur Überwachung des Raumes vor dem Fahrzeug, einer Regeleinrichtung zur Regelung der Geschwindigkeit des Fahrzeugs auf eine Sollgeschwindigkeit und/oder zur Regelung oder des Abstands zu einem vorausfahrenden Fahrzeug auf einen Sollabstand, einer Seitenraumsensorik zur Überwachung des Raumes auf mindestens einer Seite des eigenen Fahrzeugs, und einem Seitenassistenzmodul, das dazu ausgebildet ist, die Sollgeschwindigkeit und/oder den Sollabstand in Abhängigkeit von Daten der Seitenraumsensorik zu modifizieren.Solche Längsführungsassistenten werden auch als ACC-Systeme (Adaptive Cruise Control) bezeichnet und gestatten es, die Geschwindigkeit des Fahrzeugs auf eine vom Fahrer gewählte Wunschgeschwindigkeit zu regeln. In einer Folgefahrtsituation, wenn sich vor dem eigenen Fahrzeug in derselben Fahrspur ein vorausfahrendes Fahrzeug befindet, werden mit Hilfe der Vorfeldsensorik, beispielsweise mit Hilfe eines langreichweitigen Radarsensors, der Abstand und die Relativgeschwindigkeit dieses vorausfahrenden Fahrzeugs, des sogenannten Zielobjekts, gemessen, und die Geschwindigkeit des eigenen Fahrzeugs wird so angepaßt, daß der Abstand zu dem Zielobjekt auf einen Sollabstand eingeregelt wird. Dieser Sollabstand ist zumeist durch die sogenannte Zeitlücke gegeben, d.h., den zeitlichen Abstand zwischen dem Zielobjekt und dem eigenen Fahrzeug, so daß der räumliche Abstand automatisch an die jeweilige Fahrgeschwindigkeit angepaßt wird. Die Zeitlücke ist vom Fahrer zumeist innerhalb gewisser Grenzen wählbar.

Aus DE 100 30 258 A1 ist ein Längsführungsassistent der eingangs genannten Art bekannt, bei dem Fahrzeuge auf der Nebenspur detektiert werden, die sie entweder vor oder hinter dem eigenen Fahrzeug befinden.

Aus DE 103 02 052 A1 ist für Kraftfahrzeuge eine Seitenraumsensorik bekannt, die durch eine Kombination aus Radarsensoren und Videosensoren gebildet wird und es erlaubt, den Raum seitlich neben dem eigenen Fahrzeug zu überwachen. Auf diese Weise kann insbesondere erkannt werden, ob sich Fahrzeuge auf der linken oder rechten Nebenspur im toten Winkel befinden. Falls der Fahrer des eigenen Fahrzeugs das Fahrzeug im toten Winkel nicht bemerkt und zu einem Spurwechsel ansetzt, so kann er durch einen Warnhinweis auf die Gefahr aufmerksam gemacht werden.

EP-A-1 320 082 beschreibt ein Warnsystem, das eine Warnung ausgibt, wenn der seitliche Abstand zwischen dem eigenen Fahrzeug und einen anderen Objekt zu gering ist.

### Offenbarung der Erfindung

Aufgabe der Erfindung ist es, einen Längsführungsassistenten zu schaffen, der in der Lage ist, bestimmte unfallträchtige Fahrsituationen automatisch zu vermeiden.

Diese Aufgabe wird erfindungsgemäß mit den in den unabhängigen Ansprüchen 1, 4 und 5 angegebenen Merkmalen gelöst.

Gemäß der Erfindung ist somit das Seitenassistenzmodul in der Lage, aktiv in die Längsführung des Fahrzeugs einzugreifen, um Fahrsituationen zu vermeiden oder abzukürzen, in denen von Fahrzeugen, die sich annähernd auf gleicher Höhe neben dem eigenen Fahrzeug befinden, eine erhöhte Unfallgefahr ausgeht.

Eine solche Unfallgefahr besteht naturgemäß vor allem dann, wenn die Fahrspuren der Fahrbahn verhältnismäßig eng sind, beispielsweise in Baustellenbereichen. Doch auch bei Fahrspuren mit normaler Breite kann von Fahrzeugen auf den Nebenspuren eine erhöhte Unfallgefahr ausgehen, etwa wenn sich das Nebenfahrzeug für längere Zeit im toten Winkel befindet und vom Fahrer des eigenen Fahrzeugs nicht oder nicht mehr wahrgenmmen wird und der Fahrer dann einen Spurwechsel vornimmt, um einen Überholvorgang einzuleiten oder auf die rechte Nebenspur zu wechseln.

In einer Folgefahrtsituation kann die Reaktion des Seitenassistenzmoduls beispielsweise darin bestehen daß der Sollabstand so weit vergrößert wird, daß sich das eigene Fahrzeug und das Nebenfahrzeug nicht mehr auf gleicher Höhe befinden. Erst wenn sich der Abstand des Zielobjekts zu dem Nebenfahrzeug so weit vergrößert hat, daß das Nebenfahrzeug überholt werden kann, ohne daß dabei der nötige Sicherheitsabstand zum Zielobjekt unterschritten wird, bewirkt das Seitenassistenzmodul eine Verringerung des Sollabstands und damit eine Beschleunigung des eigenen Fahrzeugs, so daß das Nebenfahrzeug überholt wird.

Wenn andererseits der Abstand zum Zielobjekt relativ groß ist und gefahrlos um einen bestimmten Betrag verkürzt werden kann, so kann die Reaktion des Seitenassistenzmoduls auch darin bestehen, daß es eine Verkürzung des Sollabstands befiehlt, damit das Nebenfahrzeug schneller passiert wird. Entsprechend kann auch in einer Freifahrtsituation, wenn kein vorausfahrendes Fahrzeug verfolgt wird, der Überholvorgang durch eine vorübergehende Erhöhung der Sollgeschwindigkeit abgekürzt werden.

Die bisher dargestellten Anwendungsbeispiele betreffen Situationen, in denen sich das eigene Fahrzeug auf einer Überholspur befindet, so daß die Seitenraumsensorik (in Ländern mit Rechtsverkehr) die rechte Nebenspur überwachen muß. Es kann jedoch auch zweckmäßig sein, mit Hilfe einer entsprechenden Seitenraumsensorik die linke Nebenspur zu überwachen und durch Eingriff in die Längsführung Situationen zu vermeiden, in denen sich ein überholendes Fahrzeug längere Zeit im toten Winkel befindet oder umgekehrt das eigene Fahrzeug sich längere Zeit im toten Winkel des überholenden Fahrzeugs befindet.

Vorteilhafte Ausgestaltungen der Erfindung sind in den Unteransprüchen angegeben.

Vorzugsweise ist das Seitenassistenzmodul dazu eingerichtet, das Ausmaß, in dem der Sollabstand und/oder die Sollgeschwindigkeit modifiziert wird, in Abhängigkeit von der Fahrspurbreite zu modifizieren. Die Fahrspurbreite kann zumindest näherungsweise aus den Daten der Seitenraumsensorik oder ggf. auch der Vorfeldsensorik abgeleitet werden, insbesondere dann, wenn die Vorfeldsensorik auch einen Videosensor umfaßt. Auf engeren Fahrspuren werden dann stärkere Eingriffe in die Längsführung zugelassen, damit die Dauer der gefährlichen Fahrsituation auf ein Minimum verkürzt wird, während auf breiteren Fahrspuren kein Eingriff in die Längsführung erfolgt oder das Ausmaß dieses Eingriffs begrenzt wird, so daß längere Phasen in Kauf genommen werden, in denen sich das eigene Fahrzeug annähernd auf gleicher Höhe mit einem anderen Fahrzeug befindet.

Insbesondere in Situationen, in denen ein Lkw oder ein Gespann überholt wird, ist es auch zweckmäßig, wenn mit Hilfe der Vorfeld- und/oder Seitenraumsensorik die Länge des Lkw bzw. des Gespanns abgeschätzt wird.

### Kurze Beschreibung der Zeichnungen

Ein Ausführungsbeispiel der Erfindung ist in den Zeichnungen
dargestellt und in der nachfolgenden Beschreibung näher erläutert.

Es zeigen:
- Fig. 1: ein Blockdiagramm eines erfindungsgemäßen Längsführungsassistenten;
- Fig. 2: eine Skizze einer unfallträchtigen Verkehrssituation, die durch die Erfindung vermieden werden soll;
- Fig. 3 und 4: Skizzen für unterschiedliche Strategien zur Vermeidung der Verkehrssituation nach Fig. 2; und
- Fig. 5-7: Skizzen weiterer zu vermeidender Verkehrssituationen.

### Ausführungsformen der Erfindung

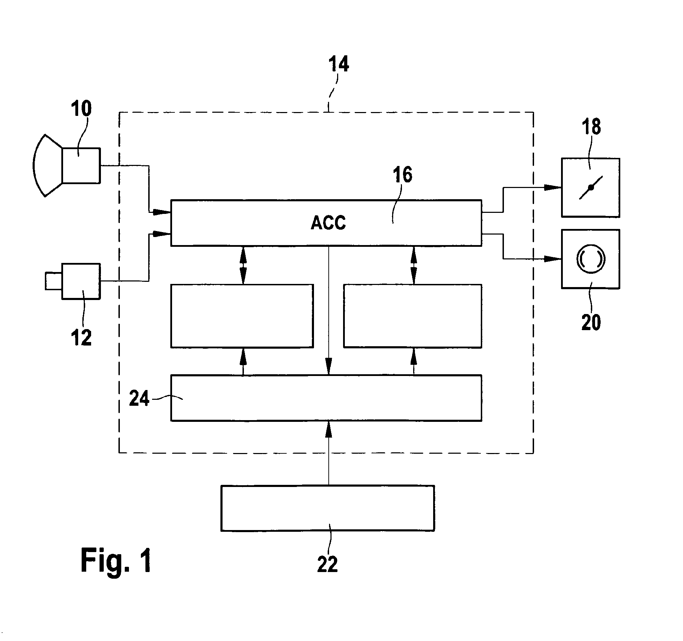

In Fig. 1 ist ein Längsführungsassistent für ein Kraftfahrzeug als Blockdiagramm dargestellt. Ein vorn im Fahrzeug eingebauter Radarsensor 10 (LRR; Long Range Radar) und ein ebenfalls nach vorn gerichtetes monokulares oder binokulares Videosystem 12 bilden zusammen eine Vorfeldsensorik zur Überwachung des Raums vor dem Fahrzeug, das mit dem Längsführungsassistenten ausgerüstet ist (im folgenden als "eigenes Fahrzeug" bezeichnet).

Eine durch ein elektronisches Datenverarbeitungssystem gebildete Regeleinrichtung 14 hat die Funktionen eines bekannten ACC-Systems 16 und greift situationsabhängig in das Antriebssystem 18 oder das Bremssystem 20 des Fahrzeugs ein, um in Freifahrt die Geschwindigkeit des eigenen Fahrzeugs auf einen Sollwert zu regeln oder in einer Folgefahrtsituation den Abstand zu einem von der Vorfeldsensorik georteten Zielobjekt auf einen Sollabstand einzuregeln.

Die Sollgeschwindigkeit und der Sollabstand sind in gewissen Grenzen vom Fahrer des eigenen Fahrzeugs wählbar sind in geeigneter Form in einem Speicher der Regeleinrichtung 14 abgelegt. Der Sollabstand wird vom Fahrer indirekt in Form einer Zeitlücke eingegeben, und das ACC-System 16 berechnet in Abhängigkeit von der aktuellen Fahrgeschwindigkeit des eigenen Fahrzeugs daraus den jeweiligen Sollabstand. In Folgefahrtsituationen berechnet das ACC-System 16 auch die Änderungen der Sollgeschwindigkeit, mit denen eine Anpassung an die Geschwindigkeit des vorausfahrenden Fahrzeugs vorgenommen wird, ohne daß abrupte und als unkomfortabel empfundene Beschleunigungs- oder Bremsvorgänge nötig werden.

Zu dem erfindungsgemäßen Längsführungsassistenten gehört darüber hinaus eine Seitenraumsensorik 22 zur Überwachung des Raumes seitlich neben dem eigenen Fahrzeug, mindestens auf einer Seite dieses Fahrzeugs. Die Seitenraumsensorik kann beispielsweise durch zusätzliche Radar- (SRR; Short Range Radar) und/oder zusätzliche Videosensoren gebildet werden, doch sind als Alternative oder Ergänzung auch Ultraschallsensoren, Lidar-Sensoren und dergleichen denkbar. Insbesondere ist die Seitenraumsensorik 22 dazu eingerichtet, Fahrzeuge auf Nebenspuren zu orten, die sich etwa auf gleicher Höhe wie das eigene Fahrzeug befinden. Zweckmäßigerweise ist die Sensorik auch in der Lage, den (seitlichen) Abstand der Nebenfahrzeuge vom eigenen Fahrzeug zu messen.

Die Regeleinrichtung 14 enthält ein Seitenassistenzmodul 24, das die Daten der Seitenraumsensorik 22 auswertet und in Abhängigkeit von diesen Daten die Sollgeschwindigkeit und/oder den Sollabstand modifiziert.

Die Arbeitsweise dieses Systems soll nachstehend anhand einiger typischer Verkehrssituationen erläutert werden.

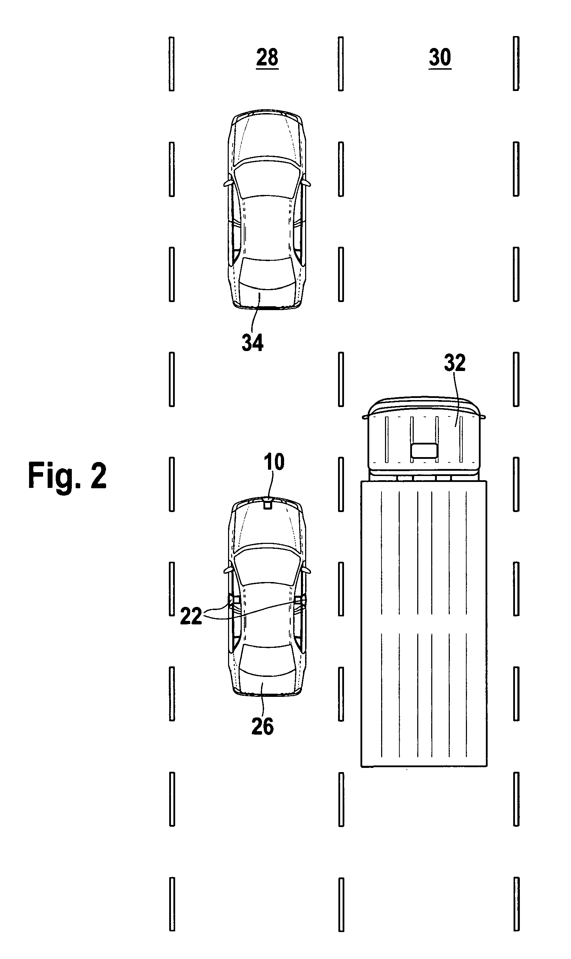

In Fig. 2 fährt das eigene, mit dem Radarsensor 10 und der Seitenraumsensorik 22 ausgestattete Fahrzeug 26 auf der linken Spur 28 einer zweispurigen Fahrbahn und überholt gerade einen auf der rechten Spur 30 fahrenden Lkw 32. Die Breite der Spuren 28 und 30 im Verhältnis zur Breite der Fahrzeuge ist verhältnismäßig gering, wie es typischerweise in Baustellenbereichen der Fall ist.

Die Seitenraumsensorik 22, beispielsweise ein oder mehrere auf der rechten Fahrzeugseite eingebaute und nach rechts gerichtete kurzreichweitige Radarsensoren, orten den Lkw 32 und messen auch dessen seitlichen Abstand. Dieser Abstand kann als Anhalt für die Breite der Spur 28 ausgewertet werden, sofern sich die Spurbreite nicht mit Hilfe des Videosystems 12 direkt bestimmen läßt.

Aufgrund der geringen Spurbreite ist der Abstand zwischen dem eigenen Fahrzeug 26 und dem Lkw 32 relativ klein, so daß dem Fahrer des eigenen Fahrzeugs nur eine sehr geringe Reaktionszeit verbleibt, um eine Kollision abzuwenden, wenn der Lkw nach links ausschert oder das eigene Fahrzeug 26 aufgrund einer Unachtsamkeit oder Irritation des Fahrers nach rechts von der Spur 28 abkommt. Das Seitenassistenzmodul 24 ist so programmiert, daß es diese gefahrenträchtige Situation erkennt und so in die Längsführung des Fahrzeugs 26 eingreift, daß die Dauer dieser Situation möglichst abgekürzt wird.

In dem in Fig. 2 gezeigten Beispiel ist jedoch eine Beschleunigung des Fahrzeugs 26 zur Abkürzung des Überholvorgangs nicht möglich, da dann der Sicherheitsabstand zu einem vorausfahrenden Fahrzeug 34 zu klein würde. Dies wird durch die Vorfeldsensorik 10 festgestellt, deren Daten auch die Grundlage für eine Regelung des Abstands zwischen den Fahrzeugen 26 und 34 bilden.

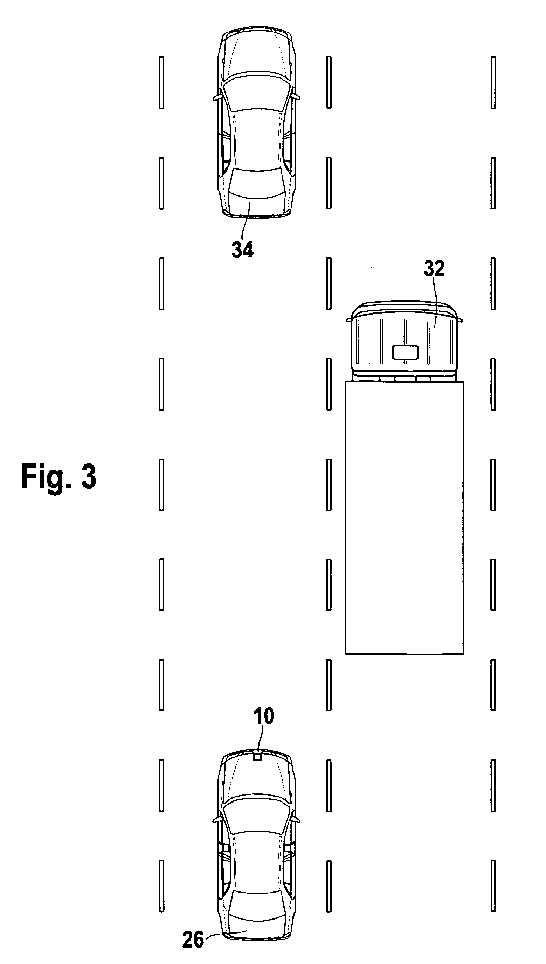

In der in Fig. 2 gezeigten Situation wird deshalb das Seitenassistenzmodul 24 mit einer Vergrößerung des Sollabstands zu dem Fahrzeug 34 reagieren. Das Resultat dieses Eingriffs ist in Fig. 3 dargestellt. Der Abstand zwischen den Fahrzeugen 26 und 34 wurde so weit vergrößert, daß sich die Vorderfront des Fahrzeugs 26 nunmehr hinter der Rückfront des Lkw 32 befindet. Da das ACC-System 16 und das Seitenassistenzmodul 24 miteinander kommunizieren, kann zur Erkennung der Situation nach Fig. 3 auch als Kriterium herangezogen werden, daß die Rückfront des Lkw 32 wieder von der Vorfeldsensorik, insbesondere vom Radarsensor 10 geortet werden kann, und als Zielobjekt für die Abstandsregelung wird dann vorübergehend statt des Fahrzeugs 34 der Lkw 32 gewählt.

Der Abstand zum Fahrzeug 34 wird auch weiterhin gemessen und verfolgt, und wenn dieser Abstand deutlich größer geworden ist als die typische Länge eines Lkw, so wird durch das Seitenassistenzmodul 24 der Sollabstand wieder auf den ursprünglichen Wert oder ggf. vorübergehend auch auf einen etwas kleineren Wert verringert, so daß das eigene Fahrzeug 26 den Lkw 32 zügig überholt und dann weiter das vorausfahrende Fahrzeug 34 als Zielobjekt verfolgt.

Die Vorfeld- und Seitenraumsensorik kann so ausgebildet sein, daß sie auch zumindest eine grobe Messung der Länge des Lkw 32 ermöglicht. Beispielsweise kann mit den seitwärts gerichteten kurzreichweitigen Radarsensoren, auch wenn diese nicht winkelauflösend sind, der Zeitpunkt erfaßt werden, an dem die Rückfront des Lkw 32 den Sensor passiert, während sich das Fahrzeug 26 zurückfallen läßt. In diesem Augenblick bilden im allgemeinen die Führerkabine und/oder die vorderen Kotflügel des Lkw Reflexionszentren, die vom Radarsensor 10 der Vorfeldsensorik geortet werden können, so daß man durch Abstandsmessung einen Wert für die Länge des Lkw erhält. Gegebenenfalls ist eine Abstandsbestimmung aber auch durch Auswertung von Videobildern, mit Hilfe von Ultraschallsensoren oder dergleichen möglich. Wenn der Abstand des Lkw 32 bekannt ist, wird der Zeitpunkt an dem der Sollabstand wieder verringert wird, so gewählt, daß der Lkw vom eigenen Fahrzeug 26 vollständig passiert werden kann, ohne daß der Sicherheitsabstand zum Fahrzeug 34 zu klein wird.

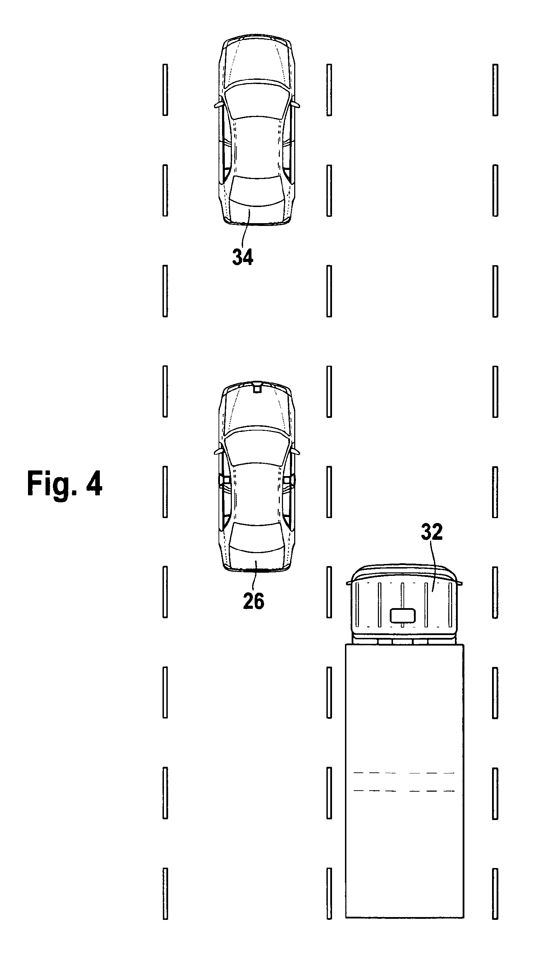

Fig. 4 illustriert eine Situation, in der das eigene Fahrzeug 26 den Lkw 32 schon nahezu vollständig überholt hat, dann jedoch die Geschwindigkeit reduzieren muß, weil auch das vorausfahrende Fahrzeug 34 langsamer geworden ist, mit der Folge, daß der Lkw 32 wieder aufholt und sich dann wieder rechts neben dem eigenen Fahrzeug 26 befindet. Eine solche Situation ist bei hoher Verkehrsdichte auf Autobahnen oder bei einem sich anbahnenden Stau relativ häufig.

Wenn die Seitenraumsensorik 22 den Lkw 32 wieder ortet, kann die Reaktion des Seitenassistenten 24 zunächst darin bestehen, daß der Sollabstand zum Fahrzeug 34 verkürzt wird, natürlich unter Einhaltung eines aus Sicherheitsgründen notwendigen Mindest-Sollabstandes. Wenn dann der Lkw 32 weiter aufschließt, wird die Strategie gewechselt und der Sollabstand wieder vergrößert, so daß sich die in Fig. 3 gezeigte Situation ergibt.

Eine ähnliche Reaktion ist auch denkbar, wenn kein vorausfahrendes Fahrzeug 34 vorhanden ist und das eigene Fahrzeug 26 in Freifahrt mit konstanter Geschwindigkeit fährt, der Lkw 32 hingegen seine Geschwindigkeit erhöht, beispielsweise bei einem Wechsel von einer Steigungsstrecke auf eine Gefällstrecke. In dem Fall wird das Seitenassistenzmodul 24 vorübergehend die Sollgeschwindigkeit erhöhen, so daß das Fahrzeug 26 in Fahrtrichtung einen ausreichenden Abstand zum Lkw 32 gewinnt und der Fahrer des eigenen Fahrzeugs dann gefahrlos auf die rechte Spur wechseln kann.

Eine ähnliche Reaktion ist auch denkbar, wenn das eigene Fahrzeug 26 schneller ist als der Lkw 32 und zum Überholen des Lkw angesetzt hat, die Geschwindigkeitsdifferenz jedoch relativ gering ist. Durch eine vorübergehende Erhöhung der Sollgeschwindigkeit kann dann der Überholvorgang abgekürzt werden.

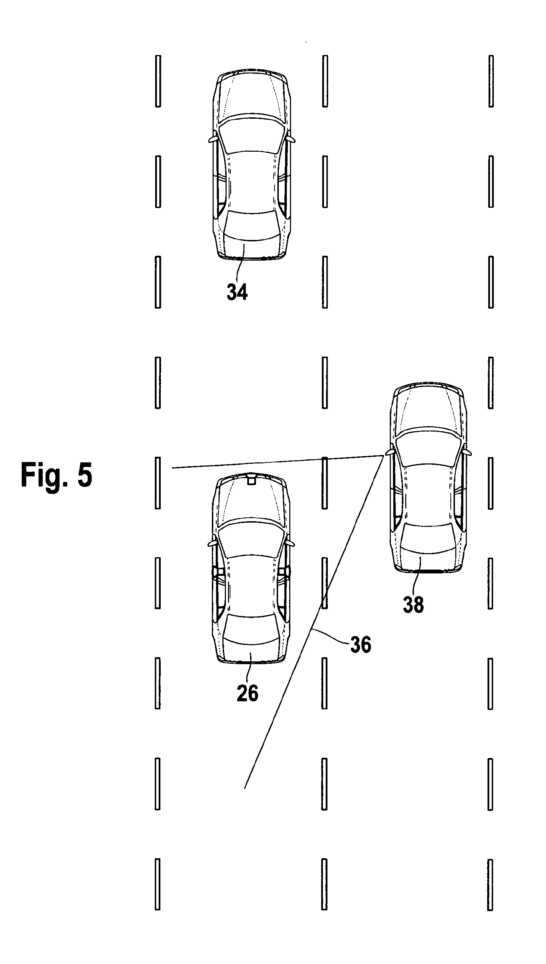

Fig. 5 illustriert eine Situation, in der sich das eigene Fahrzeug 26 im toten Winkel 36 eines auf der rechten Nebenspur fahrenden Fahrzeugs 38 befindet. Wenn dieser Zustand nicht nur von kurzer Dauer ist, besteht die Gefahr, daß der Fahrer des Fahrzeugs 38 schließlich nach links ausschert, weil er das Fahrzeug 26 nicht bemerkt hat. Auch diese Situation wird von der Seitenraumsensorik 22 erkannt, und das Seitenassistenzmodul veranlaßt eine Vergrößerung des Sollabstands, so daß das eigene Fahrzeug 26 hinter dem Fahrzeug 38 bleibt, bis das vorausfahrende Fahrzeug 34 genügend Abstand gewonnen hat und ein zügiges Überholen des Fahrzeugs 38 möglich ist.

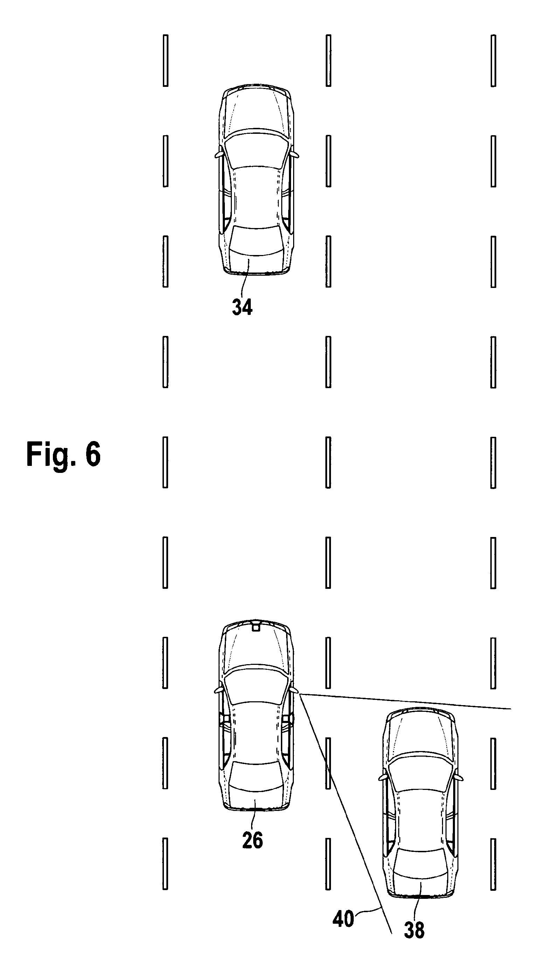

Fig. 6 zeigt eine Situation, in der sich umgekehrt das Fahrzeug 38 auf der rechten Nebenspur im toten Winkel 40 des eigenen Fahrzeugs 26 befindet. Auch diese Situation stellt ein erhöhtes Gefahrenpotential dar und wird deshalb durch das Seitenassistenzmodul 24 automatisch vermieden, je nach Abstand des vorausfahrenden Fahrzeugs 34 entweder durch Vergrößerung oder Verkleinerung des Sollabstands, oder in einer Freifahrtsituation, durch vorübergehende Vergrößerung oder Verkleinerung der Sollgeschwindigkeit.

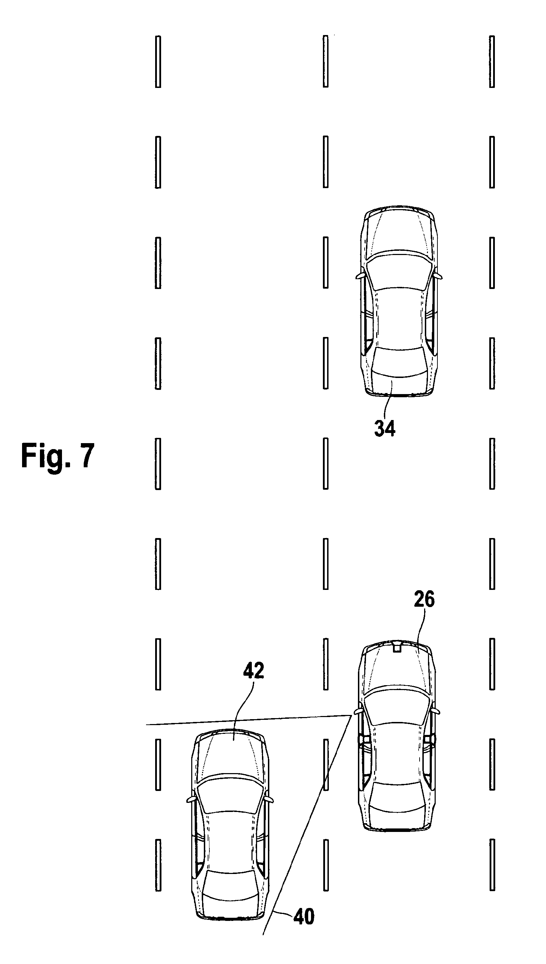

In Fig. 7 befinden sich die Fahrzeuge 26 und 34 beide auf der rechten Spur und werden von einem auf der Überholspur fahrenden Fahrzeug 42 überholt. Hier erkennt die Seitenraumsensorik auf der linken Seite des Fahrzeugs 26, wenn sich das Fahrzeug 42 aufgrund zu geringer Differenzgeschwindigkeit sehr lange im toten Winkel 40 des eigenen Fahrzeugs 26 aufhält und somit die Gefahr besteht, daß der Fahrer des eigenen Fahrzeugs das Fahrzeug 42 nicht bemerkt und nach links ausschert, um das vorausfahrende Fahrzeug 34 zu überholen. Die Reaktion des Seitenassistenzmoduls 24 wird in diesem Fall in einer vorübergehenden Vergrößerung des Sollabstands bzw. einer vorübergehenden Verringerung der Sollgeschwindigkeit bestehen (wenn das Fahrzeug 34 nicht vorhanden ist), was nicht nur die Dauer der gefahrenträchtigen Situation verkürzt, sondern auch den Überholvorgang des Fahrzeugs 42 abkürzt und damit dem Fahrer des eigenen Fahrzeugs früher die Gelegenheit gibt, nun seinerseits das vorausfahrende Fahrzeug 34 zu überholen.

Die oben beschriebenen Reaktionen des Seitenassistenzmoduls 24 sind insbesondere dann zweckmäßig, wenn die Fahrspuren der Fahrbahn verhältnismäßig schmal sind. Wenn dagegen mit Hilfe des Videosystems 12 oder direkt mit Hilfe der Seitenraumsensorik 22 festgestellt wird, daß die Fahrspuren eine größere (normale) Breite haben bzw. die seitlichen Fahrzeugabstände relativ groß sind, kann das Seitenassistenzmodul 24 inaktiv bleiben oder seine Dynamik kann eingeschränkt werden, indem nur Änderungen des Sollabstands bzw. der Sollgeschwindigkeit in engeren Grenzen zugelassen werden, so daß der Längsführungsassistent "milder" auf die jeweilige Situation reagiert, unter Inkaufnahme etwas längerer Phasen, in denen die etwas gefahrenträchtigere Situation andauert.

## Patentansprüche

1. Längsführungsassistent für Kraftfahrzeuge (26), mit einer Vorfeldsensorik (10, 12) zur Überwachung des Raumes vor dem Fahrzeug (26), einer Regeleinrichtung (14) zur Regelung der Geschwindigkeit des Fahrzeugs (26) auf eine Sollgeschwindigkeit und/oder zur Regelung des Abstands zu einem vorausfahrenden Fahrzeug (34) auf einen Sollabstand, einer Seitenraumsensorik (22) zur Überwachung des Raumes auf mindestens einer Seite des eigenen Fahrzeugs (26), und einem Seitenassistenzmodul (24), das dazu ausgebildet ist, die Sollgeschwindigkeit und/oder den Sollabstand in Abhängigkeit von Daten der Seitenraumsensorik zu modifizieren, **dadurch gekennzeichnet, daß** das Seitenassistenzmodul (24) dazu ausgebildet ist, den Sollabstand zu einem vorausfahrenden Fahrzeug (34) zu vergrößern, wenn die Seitenraumsensorik (22) erkennt, daß sich ein anderes Fahrzeug (32; 38; 42) längere Zeit etwa auf gleicher Höhe mit dem eigenen Fahrzeug befindet.

2. Längsführungsassistent nach Anspruch 1, **dadurch gekennzeichnet, daß** die Regeleinrichtung (14) dazu ausgebildet ist, nach der Vergrößerung des Sollabstands zum vorausfahrenden Fahrzeug (34) auf den Abstand zu dem auf einer Nebenspur fahrenden Fahrzeug (32; 38; 40) zu regeln, und das Seitenassistenzmodul (24) dazu ausgebildet ist, eine Rückkehr zu der Regelung auf den Abstand zu dem in der eigenen Spur vorausfahrenden Fahrzeug (34) zu veranlassen und den Sollabstand zu diesem Fahrzeug wieder zu verringern, sobald der Abstand des vorausfahrenden Fahrzeugs (34) auf einen bestimmten Wert zugenommen hat.

3. Längsführungsassistent nach Anspruch 2, **dadurch gekennzeichnet daß** die Vorfeldsensorik (10, 12) und/oder die Seitenraumsensorik (22) dazu ausgebildet ist, die Länge eines auf einer Nebenspur fahrenden Fahrzeugs (32) zu messen.

4. Längsführungsassistent für Kraftfahrzeuge (26), mit einer Vorfeldsensorik (10, 12) zur Überwachung des Raumes vor dem Fahrzeug (26), einer Regeleinrichtung (14) zur Regelung der Geschwindigkeit des Fahrzeugs (26) auf eine Sollgeschwindigkeit und/oder zur Regelung des Abstands zu einem vorausfahrenden Fahrzeug (34) auf einen Sollabstand, einer Seitenraumsensorik (22) zur Überwachung des Raumes auf mindestens einer Seite des eigenen Fahrzeugs (26), und einem Seitenassistenzmodul (24), das dazu ausgebildet ist, die Sollgeschwindigkeit und/oder den Sollabstand in Abhängigkeit von Daten der Seitenraumsensorik zu modifizieren, **dadurch gekennzeichnet, daß** das Seitenassistenzmodul (24) dazu ausgebildet ist, den Sollabstand vorübergehend zu verringern, wenn die Seitenraumsensorik (22) erkennt, daß sich ein auf einer Nebenspur fahrendes Fahrzeug (32; 38) längere Zeit auf annähernd gleicher Höhe mit dem eigenen Fahrzeug (26) befindet und der aktuelle Abstand zum vorausfahrenden Fahrzeug (34) größer ist als ein aus Sicherheitsgründen erforderlicher Mindestabstand.

5. Längsführungsassistent für Kraftfahrzeuge (26), mit einer Vorfeldsensorik (10, 12) zur Überwachung des Raumes vor dem Fahrzeug (26), einer Regeleinrichtung (14) zur Regelung der Geschwindigkeit des Fahrzeugs (26) auf eine Sollgeschwindigkeit und/oder zur Regelung des Abstands zu einem vorausfahrenden Fahrzeug (34) auf einen Sollabstand, einer Seitenraumsensorik (22) zur Überwachung des Raumes auf mindestens einer Seite des eigenen Fahrzeugs (26), und einem Seitenassistenzmodul (24), das dazu ausgebildet ist, die Sollgeschwindigkeit und/oder den Sollabstand in Abhängigkeit von Daten der Seitenraumsensorik zu modifizieren, **dadurch gekennzeichnet, daß** das Seitenassistenzmodul (24) dazu ausgebildet ist, die Sollgeschwindigkeit vorübergehend zu erhöhen, wenn kein vorausfahrendes Fahrzeug in der eigenen Spur vorhanden ist und die Seitenraumsensorik (22) erkennt, daß sich auf der rechten Nebenspur ein Fahrzeug (32; 38) längere Zeit annähernd auf gleicher Höhe mit dem eigenen Fahrzeug (26) befindet.

6. Längsführungsassistent nach einem der vorstehenden Ansprüche, **dadurch gekennzeichnet, daß** die Seitenraumsensorik (22) dazu ausgebildet ist, eine Situation zu erkennen, in der sich ein Fahrzeug (38; 42) im toten Winkel (40) des eigenen Fahrzeugs (26) befindet.

7. Längsführungsassistent nach einem der vorstehenden Ansprüche, **dadurch gekennzeichnet, daß** die Seitenraumsensorik (22) dazu ausgebildet ist, eine Situation zu erkennen, in der sich das eigene Fahrzeug (26) im toten Winkel (36) eines auf einer Nebenspur fahrenden Fahrzeugs (38) befindet.

8. Längsführungsassistent nach einem der vorstehenden Ansprüche, **dadurch gekennzeichnet, daß** die Vorfeldsensorik (10, 12) und/oder die Seitenraumsensorik (22) dazu ausgebildet ist, die Breite der von dem eigenen Fahrzeug (26) befahrenen Fahrspur (28) und/oder den seitlichen Abstand zu einem Fahrzeug auf einer Nebenspur zu messen, und das Seitenassistenzmodul (24) dazu ausgebildet ist, das Ausmaß der Modifikation der Sollgeschwindigkeit bzw. des Sollabstands in Abhängigkeit von der gemessenen Spurbreite bzw. dem gemessenen seitlichen Abstand zu variieren.

## Claims

1. Longitudinal guide assistant for motor vehicles (26), having a front-area sensor system (10, 12) for monitoring the space in front of the vehicle (26), a control device (14) for adjusting the speed of the vehicle (26) to a setpoint speed and/or for adjusting the distance from a vehicle (34) travelling ahead to a setpoint distance, a side space sensor system (22) for monitoring the space on at least one side of the driver's vehicle (26), and a side assistance module (24) which is designed to modify the setpoint speed and/or the setpoint distance as a function of data of the side space sensor system, **characterized in that** the side assistance module (24) is designed to increase the setpoint distance from a vehicle (34) travelling ahead if the side space sensor system (22) detects that another vehicle (32; 38; 42) is approximately at the same level as the driver's vehicle for a relatively long time.

2. Longitudinal guide assistant according to Claim 1, **characterized in that** the control device (14) is designed such that, after the enlargement of the setpoint distance from the vehicle (34) travelling ahead, it adjusts said setpoint distance to the distance from the vehicle (32; 38; 40) which is travelling on an adjacent lane, and the side assistance module (24) is designed to bring about a return to the adjustment to the distance from the vehicle (34) which is travelling ahead on the same lane and to reduce the setpoint distance from this vehicle again as soon as the distance from the vehicle (34) travelling ahead has increased to a specific value.

3. Longitudinal guide assistant according to Claim 2, **characterized in that** the front-area sensor system (10, 12) and/or the side space sensor system (22) are designed to measure the length of a vehicle (32) travelling on an adjacent lane.

4. Longitudinal guide assistant for motor vehicles (26), having a front-area sensor system (10, 12) for monitoring the space in front of the vehicle (26), a control device (14) for adjusting the speed of the vehicle (26) to a setpoint speed and/or for adjusting the distance from a vehicle (34) travelling ahead to a setpoint distance, a side space sensor system (22) for monitoring the space on at least one side of the driver's own vehicle (26), and a side assistance module (24) which is designed to modify the setpoint speed and/or the setpoint distance as a function of data of the side space sensor assistant, **characterized in that** the side assistance module (24) is designed to temporarily reduce the setpoint distance if the side space sensor system (22) detects that a vehicle (32; 38) which is travelling on an adjacent lane is located approximately at the same level as the driver's own vehicle (26) for a relatively long time and the current distance from the vehicle (34) travelling ahead is greater than a minimum distance which is required for safety reasons.

5. Longitudinal guide assistant for motor vehicles (26), having a front-area sensor system (10, 12) for monitoring the space in front of the vehicle (26), a control device (14) for adjusting the speed of the vehicle (26) to a setpoint speed and/or for adjusting the distance from a vehicle (34) travelling ahead to a setpoint distance, a side space sensor system (22) for monitoring the space on at least one side of the driver's own vehicle (26), and a side assistance module (24) which is designed to modify the setpoint speed and/or the setpoint distance as a function of data of the side space sensor system, **characterized in that** the side assistance module (24) is designed to increase the setpoint speed temporarily if no vehicle travelling ahead is present on the driver's own lane and the side space sensor system (22) detects that a vehicle (32; 38) is located on the right-hand adjacent lane approximately at the same level as the driver's own vehicle (26) for a relatively long time.

6. Longitudinal guide assistant according to one of the preceding claims, **characterized in that** the side space sensor system (22) is designed to detect a situation in which a vehicle (38; 42) is located in the blind spot (40) of the driver's own vehicle (26).

7. Longitudinal guide assistant according to one of the preceding claims, **characterized in that** the side space sensor system (22) is designed to detect a situation in which the driver's own vehicle (26) is in the blind spot (26) of a vehicle (38) travelling on an adjacent lane.

8. Longitudinal guide assistant according to one of the preceding claims, **characterized in that** the front-area sensor system (10, 12) and/or the side space sensor system (22) is/are designed to measure the width of the lane (28) being travelled on by the driver's own vehicle (26) and/or the lateral distance from a vehicle on an adjacent lane, and the side assistance module (24) is designed to vary the degree of modification of the setpoint speed or of the setpoint distance as a function of the measured lane width and/or the measured lateral distance.

## Revendications

1. Assistant de guidage longitudinal pour véhicules automobiles (26), comprenant un dispositif de détection de zone avant (10, 12) pour surveiller l'espace à l'avant du véhicule (26), un dispositif de régulation (14) pour réguler la vitesse du véhicule (26) à une vitesse de consigne et/ou pour réguler l'écart par rapport à un véhicule qui précède (34) à un écart de consigne, un dispositif de détection d'espace latéral (22) pour surveiller l'espace sur au moins un côté du véhicule propre (26) et un module d'assistance latéral (24) qui est configuré pour modifier la vitesse de consigne et/ou l'écart de consigne en fonction des données du dispositif de détection d'espace latéral, **caractérisé en ce que** le module d'assistance latéral (24) est configuré pour augmenter l'écart de consigne par rapport à un véhicule qui précède (34) lorsque le dispositif de détection d'espace latéral (22) détecte qu'un autre véhicule (32 ; 38 ; 42) se trouve pendant une période prolongée approximativement à la même hauteur que le véhicule propre.

2. Assistant de guidage longitudinal selon la revendication 1, **caractérisé en ce que** le dispositif de régulation (14) est configuré pour, après avoir augmenté l'écart de consigne par rapport au véhicule qui précède (34), effectuer la régulation sur l'écart par rapport au véhicule (32 ; 38 ; 40) qui circule sur une voie voisine et le module d'assistance latéral (24) est configuré pour provoquer un retour à la régulation de l'écart par rapport au véhicule qui précède (34) sur la même voie et de réduire de nouveau l'écart de consigne par rapport à ce véhicule dès que l'écart par rapport au véhicule qui précède (34) a augmenté jusqu'à une valeur donnée.

3. Assistant de guidage longitudinal selon la revendication 2, **caractérisé en ce que** le dispositif de détection de zone avant (10, 12) et/ou le dispositif de détection d'espace latéral (22) est configuré pour mesurer la longueur d'un véhicule (32) qui circule sur une voie voisine.

4. Assistant de guidage longitudinal pour véhicules automobiles (26), comprenant un dispositif de détection de zone avant (10, 12) pour surveiller l'espace à l'avant du véhicule (26), un dispositif de régulation (14) pour réguler la vitesse du véhicule (26) à une vitesse de consigne et/ou pour réguler l'écart par rapport à un véhicule qui précède (34) à un écart de consigne, un dispositif de détection d'espace latéral (22) pour surveiller l'espace sur au moins un côté du véhicule propre (26) et un module d'assistance latéral (24) qui est configuré pour modifier la vitesse de consigne et/ou l'écart de consigne en fonction des données du dispositif de détection d'espace latéral, **caractérisé en ce que** le module d'assistance latéral (24) est configuré pour réduire temporairement l'écart de consigne lorsque le dispositif de détection d'espace latéral (22) détecte qu'un véhicule (32 ; 38) qui circule sur une voie voisine se trouve pendant une période prolongée approximativement à la même hauteur que le véhicule propre (26) et que l'écart actuel par rapport à un véhicule qui précède (34) est supérieur à l'écart minimum nécessaire pour des raisons de sécurité.

5. Assistant de guidage longitudinal pour véhicules automobiles (26), comprenant un dispositif de détection de zone avant (10, 12) pour surveiller l'espace à l'avant du véhicule (26), un dispositif de régulation (14) pour réguler la vitesse du véhicule (26) à une vitesse de consigne et/ou pour réguler l'écart par rapport à un véhicule qui précède (34) à un écart de consigne, un dispositif de détection d'espace latéral (22) pour surveiller l'espace sur au moins un côté du véhicule propre (26) et un module d'assistance latéral (24) qui est configuré pour modifier la vitesse de consigne et/ou l'écart de consigne en fonction des données du dispositif de détection d'espace latéral, **caractérisé en ce que** le module d'assistance latéral (24) est configuré pour augmenter temporairement la vitesse de consigne lorsqu'il n'existe aucun véhicule qui précède dans la même voie et que le dispositif de détection d'espace latéral (22) détecte qu'un véhicule (32 ; 38) se trouve sur la voie voisine de droite pendant une période prolongée approximativement à la même hauteur que le véhicule propre (26).

6. Assistant de guidage longitudinal selon l'une des revendications précédentes, **caractérisé en ce que** le dispositif de détection d'espace latéral (22) est configuré pour détecter une situation dans laquelle un véhicule (38 ; 42) se trouve dans l'angle mort (40) du véhicule propre (26).

7. Assistant de guidage longitudinal selon l'une des revendications précédentes, **caractérisé en ce que** le dispositif de détection d'espace latéral (22) est configuré pour détecter une situation dans laquelle le véhicule propre (26) se trouve dans l'angle mort (36) d'un véhicule (38) qui circule sur une voie voisine.

8. Assistant de guidage longitudinal selon l'une des revendications précédentes, **caractérisé en ce que** le dispositif de détection de zone avant (10, 12) et/ou le dispositif de détection d'espace latéral (22) est configuré pour mesurer la largeur de la voie de circulation (28) sur laquelle circule le véhicule propre (26) et/ou l'écart latéral par rapport à un véhicule sur une voie voisine et le module d'assistance latéral (24) est configuré pour faire varier le niveau de modification de la vitesse de consigne ou de l'écart de consigne en fonction de la largeur de voie mesurée ou de l'écart latéral mesuré.
